# EUROPÄISCHE PATENTSCHRIFT

(11) **EP 3 267 928 B1**
(45) Veröffentlichungstag und Bekanntmachung des Hinweises auf die Patenterteilung: **29.11.2023**
(21) Anmeldenummer: 16707488.9
(22) Anmeldetag: 03.03.2016
(51) Int. Cl.: A61C 8/00

(54) **DENTALIMPLANTAT**
DENTAL IMPLANT
IMPLANT DENTAIRE

(30) Priorität: 11.03.2015 DE 102015103544
(43) Veröffentlichungstag der Anmeldung: 17.01.2018
(73) Patentinhaber: Universität Basel, 4003 Basel (CH); Universität Zürich, 8006 Zürich (CH)
(72) Erfinder: STUEBINGER, Stefan Bernd, 4102 Binningen (CH)
(74) Vertreter: Kleine, Hubertus
(86) Internationale Anmeldenummer: PCT/EP2016/054561
(87) Internationale Veröffentlichungsnummer: WO 2016/142270

(56) Entgegenhaltungen:
- EP-A1- 2 656 813
- EP-A1- 2 674 127
- WO-A1-2011/064369
- CA-A1- 2 549 253
- DE-A1-102005 058 496
- US-A- 5 975 903
- US-A1- 2013 017 512
- US-B1- 6 386 877
- US-B1- 6 854 972

## Beschreibung

Die Erfindung betrifft ein Dentalimplantat, mit einem Verankerungsbereich zur Verankerung in einem Knochen, der vorzugsweise ein Gewinde zum Einschrauben in den Knochen aufweist, und mit einem Befestigungsbereich zur Befestigung einer Suprakonstruktion.

Dentalimplantate sind seit Jahrzehnten in der Zahnmedizin gebräuchlich.

Dentalimplantate weisen in der Regel einen Verankerungsbereich mit einem Gewindeabschnitt auf, der zur Schraubbefestigung im Knochen ausgebildet ist. Ferner weist ein Dentalimplantat in der Regel einen Befestigungsbereich auf, an dem eine Suprakonstruktion befestigt werden kann.

Bei einteiligen Dentalimplantaten ist ein Fortsatz (auch Abutment genannt) vorgesehen, der vom Verankerungsbereich aus hervorsteht und an dem die Suprakonstruktion befestigt werden kann. Bei zweiteiligen Dentalimplantaten ist in der Regel eine irgendwie geartete Vertiefung vorgesehen, die sich in das Dentalimplantat hinein erstreckt und an dem ein Abutment durch Schrauben oder durch einen Formschluss befestigt werden kann.

Es gibt ferner diverse Konstruktionen, bei denen am oberen Ende des Verankerungsbereiches ein weiteres Gewinde vorgesehen ist, das feiner als das Gewinde im unteren Bereich ist (vgl. insbesondere EP 2 656 813 A1, DE 10 2012 105 873 A1, WO 2014/091345 A2, WO 2003/015654 A1) oder das gröber als das Gewinde im unteren Teil des Verankerungsbereichs ist (vgl. EP 1 764 060 A1).

Gemäß der WO 2003/015654 A1 ist am oberen Ende des Verankerungsabschnitts, der mit einem selbstschneidenden Gewinde versehen ist, ein Feingewindeabschnitt vorgesehen, der vorzugsweise zusätzlich leicht konisch ausgebildet ist.

Als weiterer Stand der Technik ist die EP 2 674 127 A1, die DE 10 2005 058 496 A1, die US 5 975 903 A, die WO 2011 /064369 A1, die CA 2 549 253 A1, die US 6 854 972 B1, die US 2013/017512 A1 und die US 6 386 877 B1 genannt.

Durch den Feingewindeabschnitt soll das Problem der Knochenresorption verringert werden.

Bei der Langzeitstabilität von Dentalimplantaten spielen mehrere Faktoren eine Rolle. Eine ausreichende Osseointegration soll durch eine bestimmte Mikrostruktur der Außenoberfläche des Dentalimplantates verbessert werden, wobei eine mittelraue, etwa durch Sandstrahlen, erzeugte Oberfläche vorteilhaft sein soll. Selbst wenn das Dentalimplantat anfänglich gut osseointegriert wird, so ergibt sich doch häufig im Laufe der Zeit ein merklicher periimplantärer Knochenabbau, wodurch die Langzeitstabilität des Dentalimplantats beeinträchtigt wird.

Hierzu gibt es bislang keine überzeugenden Ansätze.

Vor diesem Hintergrund liegt der Erfindung die Aufgabe zugrunde, ein Dentalimplantat zu offenbaren, das zu einer verbesserten Osseointegration führt und das zu einem möglichst geringen periimplantären Knochenabbau führt.

Diese Aufgabe wird erfindungsgemäß durch ein zweiteiliges Dentalimplantat gemäß Anspruch 1 gelöst. Bevorzugte Ausführungsformen der Erfindung sind in den abhängigen Ansprüchen definiert.

Es hat sich gezeigt, dass die Leitstruktur am Aufbaubereich mit einer Mehrzahl von nach außen hervorstehenden Stegen einerseits die Osseointegration verbessert und andererseits den periimplantären Knochenabbau verringert. Die Leitstruktur ermöglicht es, dass Knochensubstanz entlang des Aufbaubereichs wächst oder sich anlagert. Um eine durchgehende Knochenanlage zu erreichen, ist eine breitflächige Versorgung des Knochens erforderlich. Hierzu stellt die Leitstruktur die notwendigen Voraussetzungen bereit. Es ist dabei vorgesehen, dass
zwischen benachbarten Stegen jeweils eine Rille gebildet ist und dass sich die . Stege in einem Winkel zur Längsachse des Dentalimplantats, der gemäß einer ersten Variante der Erfindung zwischen 10° und 70° liegt, weiter bevorzugt zwischen 20° und 60°, besonders bevorzugt zwischen 35° und 55°, erstrecken.

Dies bedeutet, dass sich die Stege parallel zur Längsachse des Dentalimplantats erstrecken können oder aber in einem mehr oder minder großen Winkel dazu.

In Abgrenzung zu den im Stand der Technik bekannten Gewindestrukturen handelt es sich bei der Leitstruktur nicht um ein Gewinde. Im Stand der Technik bekannte eingangs zitierte Gewinde sind eingängige Gewinde mit Selbsthemmung. Selbst wenn die erfindungsgemäße Leitstruktur als mehrgängiges Gewinde aufgefasst würde, so unterscheidet sie sich schon durch ihre Mehrgängigkeit von im Stand der Technik bekannten Gewinden. Außerdem fehlt es an einer Selbsthemmung wie im Stand der Technik.

Eine Selbsthemmung erfordert einen nicht zu großen Steigungswinkel. Die Stege der Leitstruktur weisen gemäß einer zweiten Variante der Erfindung ausgehend von einem parallelen Verlauf zur Längsachse des Dentalimplantats (d.h. einem Winkel von 0° zur Längsachse des Dentalimplantats) Winkel zur Längsachse des Dentalimplantats von höchstens 70° oder 60° auf und ermöglichen keine Selbsthemmung.

Weiterhin ist vorgesehen, dass sich die zueinander benachbarten Stege und Rillen bis an einen Rand des Implantats, welcher Rand zugleich das coronale Ende des Implantats ist, erstrecken.

In weiter bevorzugter Ausführung der Erfindung sind mindestens sechs, vorzugsweise mindestens zehn, weiter bevorzugt 12 bis 40 Stege entlang der Außenoberfläche des Aufbaubereichs in regelmäßigen oder gleichmäßigen Abständen zueinander verlaufend angeordnet.

In Abgrenzung zu einer mehrgängigen Gewindestruktur weist die Leitstruktur des Aufbaubereiches also mindestens sechs oder mehr Stege auf.

Gemäß einer weiteren Ausführung der Erfindung erstrecken sich die Stege helixförmig oder spiralförmig entlang der Außenoberfläche des Aufbaubereichs.

Hierbei können sich die Stege ohne Unterbrechung entlang der Außenoberfläche des Aufbaubereichs erstrecken.

Weiterhin können die Stege in der gleichen Richtung wie ein Gewinde am Verankerungsbereich gegenüber der Längsachse des Dentalimplantats geneigt sein. Grundsätzlich jedoch ist auch eine Neigung in der umgekehrten Richtung möglich.

Gemäß einer weiteren Ausführung der Erfindung verlaufen die Stege in einer ebenen Abwicklung des Aufbaubereichs vom Verankerungsbereich aus in Richtung zum vom Verankerungsbereich entfernten (coronalen) Ende des Aufbaubereichs hin konvex.

Auch bei einer derartigen Ausführung kann ein Augmentat durch eine Art Schraubbewegung auf dem Aufbaubereich befestigt werden.

Gemäß einer weiteren Ausführung der Erfindung weist der Aufbaubereich eine konvexe oder konische Außenkontur auf.

Eine derartige Ausführung hat den Vorteil, dass im Aufbaubereich nur einen linienförmigen bzw. unterbrochenen linienförmigen Kontaktbereich zum Knochen gibt, wodurch das Anwachsen des Knochens erleichtert wird.

In Abwandlung von dem zuvor erwähnten durchgehenden Aufbau der Stege können diese auch unterbrochen sein.

Gemäß einer weiteren Abwandlung der Erfindung sind die Stege aus einer Folge von Vorsprüngen gebildet, die entlang einer Linie angeordnet sind.

Hierdurch kann die Osseointegration gegebenenfalls noch weiter verbessert werden, da insgesamt eine verbesserte Anlage an der Knochenstruktur erreicht wird und lokal erhöhte Flächenpressungen vermindert werden.

Gemäß einer weiteren Abwandlung der Erfindung erstreckt sich entlang des Aufbaubereichs um den gesamten Außenumfang eine erste Folge von Stegen parallel zueinander, an die sich um den gesamten Außenumfang eine zweite Folge von parallel zueinander angeordneten Stegen anschließt, die mit der ersten Folge von Stegen ausgerichtet ist oder dazu versetzt angeordnet ist.

Gemäß einer weiteren Ausführung der Erfindung sind einzelne Stege entlang des Außenumfangs versetzt zueinander, jedoch parallel zueinander angeordnet.

In weiterer Abwandlung der Erfindung sind zwischen benachbarten durchgehenden Stegen einzelne unterbrochene Stege angeordnet.

In weiterer Abwandlung der Erfindung sind einzelne Stege entlang der Außenoberfläche in einem regelmäßigen Muster winklig zueinander angeordnet.

Sämtliche dieser Ausführungsformen sind geeignet, eine verbesserte Osseointegration zu unterstützen und den periimplantären Knochenabbau zu verringern.

Gemäß einer weiteren Ausführungsform der Erfindung ist der Aufbaubereich zum Überstand über ein Bohrloch im Knochen vorgesehen.

Auf diese Weise kann sich der Knochen außerhalb des Verschraubungsbereiches, der durch das Gewinde des Verankerungsbereiches gebildet ist, im unmittelbar daran angrenzenden Aufbaubereich gut an das Dentalimplantat anlagern.

Gemäß einer weiteren Ausführung der Erfindung ist der Aufbaubereich zur Verankerung von Augmentat vorgesehen.

Das Augmentat kann um den Aufbaubereich herum angeordnet werden oder gegebenenfalls, je nach dessen Struktur, in gewisser Weise fixiert werden.

Die Anlagerung von Augmentat am Aufbaubereich ist dann von Vorteil, wenn die Knochenstärke nicht mehr ausreicht, um die notwendige Minimallänge eines Dentalimplantats aufzunehmen, die bei etwa 8 bis 12 mm liegt. Der Aufbaubereich ist optimal geeignet, um eine sichere Osseointegration des Augmentats zu gewährleisten.

Gemäß einer weiteren Ausgestaltung der Erfindung weisen die Rillen eine geringere Tiefe auf als die Gänge eines Gewindes am Verankerungsbereich.

Es hat sich gezeigt, dass eine relativ geringe Tiefe der Rillen besonders vorteilhaft ist für eine günstige Osseointegration.

Gemäß einer weiteren Ausgestaltung der Erfindung ist der Außenumfang am Verankerungsbereich größer oder gleich dem Außenumfang am Aufbaubereich.

Auf diese Weise wird vermieden, dass beim Einschrauben des Dentalimplantats mittels seines am Verankerungsbereich vorgesehenen Gewindes auch der Aufbaubereich in den Knochen einschneidet. Auf diese Weise ist eine optimale Osseointegration am Aufbaubereich ermöglicht.

Das erfindungsgemäße Dentalimplantat ist zweiteilig ausgebildet und sein Befestigungsbereich weist eine Vertiefung mit Befestigungselementen zur Befestigung eines Abutments auf.

Hierbei kann in der Vertiefung ein Innengewinde oder mindestens ein Formschlusselement zur Befestigung eines Abutments vorgesehen sein.

Vorzugsweise erstreckt sich hierbei die Vertiefung ausgehend von einem Ende des Aufbaubereichs in diesen hinein.

Das Dentalimplantat besteht vorzugsweise aus Keramik, insbesondere aus einer Zirkonoxidkeramik.

Es hat sich gezeigt, dass hiermit Oberflächen mit einer besonders guten Osseointegration bereitgestellt werden können. Auch ist eine derartige Materialwahl besonders für Rekonstruktionen im Vorderzahnbereich geeignet, da die Farbe der Keramik, wie etwa Zirkonoxidkeramik, der natürlichen Zahnfarbe stark angenähert ist.

In einer alternativen Ausführung besteht das Dentalimplantat aus Metall, insbesondere aus einer Titanlegierung. Auch kann das Dentalimplantat aus diversen Legierungen oder Gradientenmaterialien bestehen. Auch eine Herstellung im 3D-Druck aus Metall oder Keramik ist denkbar.

Hiermit ergibt sich eine sehr gute mechanische Stabilität und einfache Herstellbarkeit.

Gemäß einer weiteren Ausgestaltung der Erfindung ist das Dentalimplantat an seiner Außenoberfläche aufgeraut, insbesondere mechanisch mittels einer Strahlbehandlung, chemisch mittels einer Ätzbehandlung oder thermisch mittels einer Laserbehandlung oder mittels einer Plasmabehandlung.

Des Weiteren kann das Dentalimplantat an seiner Außenoberfläche chemisch aktiviert sein, insbesondere durch eine Ätzbehandlung oder durch Applikation einer knochenaffinen Substanz.

Durch derartige Oberflächenbehandlungen, die die Außenoberfläche des Verankerungsbereichs und des Aufbaubereichs umfassen, lässt sich eine verbesserte Osseointergration erreichen.

Gemäß einer weiteren Ausgestaltung der Erfindung weist der Verankerungsbereich eine erste Länge in Axialrichtung auf und der Aufbaubereich eine zweite Länge in Axialrichtung, wobei die erste Länge mindestens so groß wie die zweite Länge ist.

Hierbei kann auch die erste Länge größer als die zweite Länge sein.

Vorzugsweise beträgt hierbei die zweite Länge etwa 3 bis 10 mm, wobei die Gesamtlänge von Verankerungsbereich und Aufbaubereich vorzugsweise maximal 15 Millimeter beträgt.

Je nach Anwendungsfall ist dies eine optimale Länge für den Aufbaubereich.

Die Stege können schließlich an ihrer Außenoberfläche abgeflacht oder abgerundet sein.

Auch dies unterstützt ein Anwachsen des Knochens.

Ferner wird durch die Erfindung ein Verfahren zum Implantieren eines Dentalimplantats mit den folgenden Schritten bereitgestellt:
- Erzeugen einer Vertiefung im Knochen, die zur Aufnahme des Verankerungsbereichs geeignet ist, insbesondere durch Bohren, Ultraschallschneiden oder Laserschneiden;
- Einschrauben des Dentalimplantats in die Bohrung, derart, dass der Aufbaubereich entweder mit dem Knochenniveau abschließt oder nur um einen geringen Betrag von vorzugsweise etwa 0,5 mm bis 2 mm über den Knochen hinaus hervorsteht.

Diese Variante ist besonders bevorzugt, wenn ausreichend Knochensubstanz zur Verfügung steht und keine Verstärkung durch ein Augmentat erforderlich ist.

Ist dagegen eine Verstärkung durch ein Augmentat erforderlich, so kann die Dentalimplantation auf folgende Weise erfolgen:
- Erzeugung einer Vertiefung im Knochen, die zur Aufnahme des Verankerungsbereichs geeignet ist, insbesondere durch Bohren, Ultraschallschneiden oder Laserschneiden;
- Verankern des Dentalimplantats in die Bohrung, derart, dass der Aufbaubereich um einen geringen Betrag von vorzugsweise etwa 1 mm bis 10 mm, weiter bevorzugt von 3 mm bis 10 mm, über den Knochen hinaus hervorsteht;
- Befestigung eines Augmentats am Aufbaubereich.

Es versteht sich, dass die vorstehend beschriebenen Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine perspektivische Ansicht einer ersten Ausführung eines erfindungsgemäßen Dentalimplantats;
- Fig. 2: eine erste Integrationsmöglichkeit des Dentalimplantats an einem Kieferknochen mit zusätzlich angebrachtem Augmentat und aufgesetzter Suprakonstruktion;
- Fig. 3: eine zweite Möglichkeit der Integration im Kiefer ohne zusätzliches Augmentat;
- Fig. 4: eine vereinfachte Seitenansicht einer weiteren Ausführung eines erfindungsgemäßen Dentalimplantats;
- Fig. 5: eine weitere Abwandlung eines erfindungsgemäßen Dentalimplantats in der Seitenansicht;
- Fig. 6: eine weitere Ausführung eines nicht erfindungsgemäßen Dentalimplantats in der Seitenansicht;
- Fig. 7: eine weitere Ausführung eines nicht-erfindungsgemäßen Dentalimplantats in der Seitenansicht;
- Fig. 8: eine weitere Ausführung eines nicht-erfindungsgemäßen Dentalimplantats in der Seitenansicht;
- Fig. 9: eine weitere Ausführung eines nicht-erfindungsgemäßen Dentalimplantats in der Seitenansicht;
- Fig. 10: eine weitere Abwandlung eines nicht erfindungsgemäßen Dentalimplantats, wobei nur der Aufbaubereich in einer ebenen Abwicklung dargestellt ist;
- Fig. 11: eine weitere Ausführung eines erfindungsgemäßen Dentalimplantats in perspektivischer Darstellung;
- Fig. 12: eine Seitenansicht des Dentalimplantats gemäß Fig. 11;
- Fig. 13: eine weitere Abwandlung des Dentalimplantats gemäß Fig. 11 in der Seitenansicht und
- Fig. 14: eine weitere Abwandlung des Dentalimplantats gemäß Fig. 11 in der Seitenansicht.

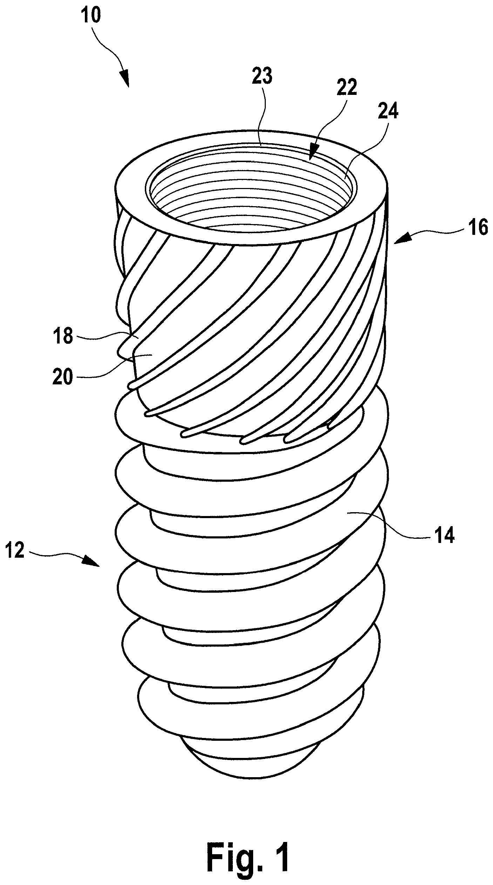

Fig. 1 zeigt eine erste Ausführung eines erfindungsgemäßen Dentalimplantats in perspektivischer, vergrößerter Darstellung.

Das Dentalimplantat 10 weist einen Verankerungsbereich 12 mit einem selbstschneidenden Gewinde 14 auf, das zum Einschrauben des Dentalimplantats 10 in eine geeignete Vertiefung im Kieferknochen vorgesehen ist, die in der Regel durch eine Bohrung oder etwa mit Hilfe eines Lasers erzeugt wird.

An den Verankerungsbereich 12 schließt sich unmittelbar ein weiterer Bereich an, der hier als Aufbaubereich 16 bezeichnet ist. Der Aufbaubereich 16 dient dazu, einen Knochenaufbau zu unterstützen, eine gute Osseointegration zu gewährleisten und gleichzeitig einen periimplantären Knochenabbau möglichst zu verhindern.

Der Aufbaubereich 16 weist in der Regel einen gleich großen oder etwas geringeren Außendurchmesser als der Verankerungsbereich 12 auf. An der Außenoberfläche des Aufbaubereichs 16 ist eine Leitstruktur vorgesehen, die im hier dargestellten Fall eine Mehrzahl von nach außen hervorstehenden dünnen Stegen 18 aufweist, die parallel zueinander angeordnet sind und spiralförmig um die Außenoberfläche verlaufen. Zwischen jeweils zwei benachbarten Stegen 18 ist eine Rille 20 gebildet. Im vorliegenden Fall gibt es beispielsweise 15 Stege, die in gleichmäßigen Abständen zueinander entlang der Außenoberfläche des Aufbaubereichs 16 spiralförmig verlaufend angeordnet sind. Die Tiefe der Rillen 20 am Aufbaubereich 16 ist hierbei deutlich geringer als die Tiefe des Gewindes 14 am Verankerungsbereich 12.

Der Aufbaubereich 16 ist speziell dazu vorgesehen, die Anlagerung von Knochengewebe zu erleichtern und zu unterstützen. Ein Einschrauben in den Knochen erfolgt nur mit dem Verankerungsbereich. Dagegen kann der Aufbaubereich 16 über die Bohrung des Knochens nach außen hervorstehen. Er kann somit entweder ein Anwachsen von Knochengewebe an seiner Leitstruktur ermöglichen oder er kann dazu genutzt werden, um ein Augmentat anzugliedern, durch das eine nicht ausreichende Knochentiefe verstärkt wird.

Es hat sich gezeigt, dass durch die Rillen 20 geringer Tiefe eine besonders gute Osseointegration ermöglicht wird. Presspassungen im Bereich des Aufbaubereichs 16 werden vermieden. Es ergibt sich eine deutlich bessere Druckverteilung zum angrenzenden Knochen, als dies beim Gewinde im Verankerungsbereich 12 der Fall ist. Die Stege 18 am Aufbaubereich 16 bilden kein Gewinde, wie dies bei einigen herkömmlichen Dentalimplantaten bereits bekannt ist. Selbst wenn man den Verankerungsbereich mit seinen Stegen 18 als mehrgängiges Gewinde auffassen würde, so ist festzustellen, dass es hierbei eine große Anzahl von Gewindegängen aufweisen würde, im Beispielsfall 15, was im Stand der Technik nicht bekannt ist.

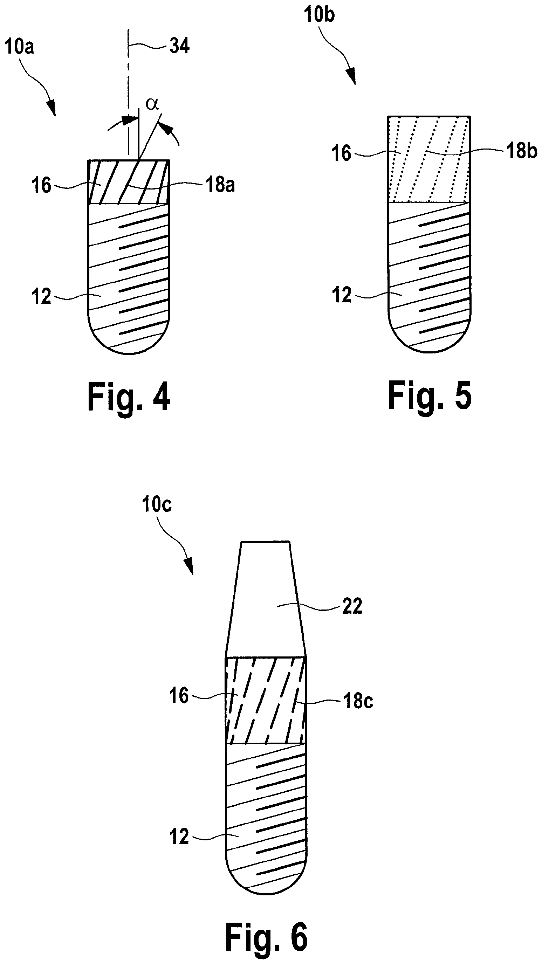

Außerdem ist der Winkel α zwischen einer Längsachse 34 des Dentalimplantats und den Stegen 18 derart gering, dass keine Selbsthemmung auftritt (vgl. Fig. 4).

Das Dentalimplantat 10 weist ferner einen Befestigungsbereich 22 auf, der zur Aufnahme eines Abutments (nicht dargestellt) vorgesehen ist. Bei dem Dentalimplantat 10 gemäß Fig. 1 weist der Befestigungsbereich 22 eine Vertiefung 23 auf, die sich ausgehend von der Endfläche des Aufbaubereichs 16 in diesen hinein erstreckt. An der Innenoberfläche der Vertiefung 23 ist ein Innengewinde 24 vorgesehen, das zur Schraubbefestigung eines Abutments dient. Es versteht sich, dass anstelle eines Innengewindes 24 auch geeignete Formschlusselemente vorgesehen sein können, um ein Abutment durch Erzeugung eines Formschlusses bei Eindrehen zu befestigen, wie dies in zahlreichen Ausführungen im Stand der Technik bekannt ist.

Das Dentalimplantat 10 kann aus Metall oder Keramik bestehen, etwa aus Zirkonoxid oder aus einer Titanlegierung. Die Außenoberfläche ist vorzugsweise in geeigneter Weise aufgeraut, zum Beispiel durch eine Strahlbehandlung mittels Korund, oder ist chemisch etwa mittels einer Ätzung vorbehandelt, um eine besonders knochenaffine Oberfläche zu erzielen.

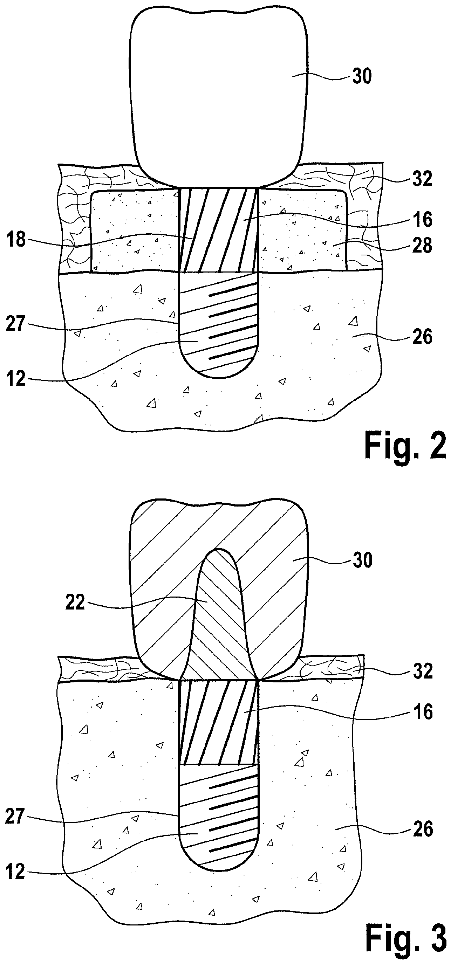

Fig. 2 zeigt einen möglichen Einsatzbereich des Dentalimplantats 10 an einem Kieferknochen.

In den Kieferknochen 26 wurde eine Bohrung 27 eingebracht, in die das Dentalimplantat 10 mittels des Gewindes 14 am Verankerungsbereich 12 eingeschraubt wurde. Der Aufbaubereich 16 besteht aus dem Knochen 26 nach außen hervor. An dem Aufbaubereich 16 wurde unmittelbar angrenzend ein Augmentat 28 angebracht, was gegebenenfalls durch eine gewisse Schraubbewegung beim Aufsetzen auf die Stege 18 unterstützt werden kann. Auf dem Aufbaubereich 16 wurde eine Suprakonstruktion 30 in Form einer Krone appliziert, was etwa unter Zwischenlage eines Abutments bei der Ausführung gemäß Fig. 1 erfolgen kann, wenn das Dentalimplantat als zweiteiliges Dentalimplantat aufgebaut ist.

In alternativer Weise kann das Dentalimplantat auch als einteiliges Dentalimplantat ausgebildet sein, wobei der Befestigungsbereich 22 einstückig mit dem Aufbaubereich 16 und dem Verankerungsbereich 12 ausgebildet ist, wie dies in Fig. 3 dargestellt ist. Hierbei bildet der Befestigungsbereich 22 selbst das Abutment, an dem eine Krone oder eine sonstige Suprakonstruktion 30 befestigt werden kann.

Bei der Ausführung gemäß Fig. 3 wurde kein Augmentat verwendet, da hier die Knochentiefe ausreichend ist, um das Dentalimplantat unmittelbar aufnehmen zu können. Die Gingiva 32 schließt sich unmittelbar an den Knochen 26 an und reicht bei erfolgreicher Dentalimplantation bis an das äußere Ende des Aufbaubereichs 16 heran.

Der Aufbaubereich 16 unterstützt eine gute Osseointegration und wirkt einem periimplantären Knochenabbau entgegen.

Die Länge der Bohrung 17 in Fig. 3 ist vorzugsweise so bemessen, dass das Dentalimplantat 10 mit seinem Verankerungsbereich 12 und seinem Aufbaubereich 16 vollständig in der Bohrung 17 aufgenommen ist und nur mit seinem Befestigungsbereich 22 über den Knochen 26 hinaus hervorsteht. Die Länge der Bohrung 17 wird also vorzugsweise so bemessen, dass das Dentalimplantat 10 mit dem Ende seines Aufbaubereichs 16 etwa auf dem Niveau des Knochens 26 abschließt ("Bone-Level") oder allenfalls um einen geringen Betrag von 0,5 bis 1 Millimeter hinaus hervorsteht.

Der Durchmesser des Dentalimplantats 10 im Bereich des Aufbaubereichs 16 ist dabei vorzugsweise etwas geringer als im Verankerungsbereich 12, so dass sich beim Einschrauben des Dentalimplantats 10 mit seinem Gewinde 14 in die Bohrung 27 zwischen dem Aufbaubereich 16 und dem Knochen 26 keine oder nur eine geringfügige Flächenpressung ergibt. Vorzugsweise verbleibt ein geringer Spalt, so dass der Knochen entlang der Leitstruktur des Aufbaubereichs 18 an das Dentalimplantat 10 anwachsen kann.

Im Folgenden werden anhand der Fig. 4 bis 10 verschiedene Varianten des erfindungsgemäßen Dentalimplantats erläutert.

Hierbei werden für entsprechende Teile entsprechende Bezugsziffern verwendet.

Fig. 4 zeigt ein erfindungsgemäßes Dentalimplantat 10a, bei dem der Aufbaubereich 16 etwas kürzer als bei den vorstehend beschriebenen Ausführungen ausgestaltet ist. Ein solcher kürzerer Bereich ist insbesondere dann vorteilhaft, wenn das Dentalimplantat 10a ohne zusätzliches Augmentat unmittelbar zur Dentalimplantation verwendet werden soll. Hierbei wird das Dentalimplantat 10a vorzugsweise derart in ein Bohrloch im Kieferknochen eingeschraubt, dass der Aufbaubereich 16 um einen geringeren Bereich von etwa 0,5 bis 2 mm hinaus hervorsteht. Die Bohrung kann auch so gestaltet sein, dass der Aufbaubereich 16 noch teilweise in das Bohrloch hineinragt und entweder gar nicht oder nur zu einem sehr geringen Teil über den Rand des Knochens 26 hinaus hervorsteht.

In Fig. 5 ist eine weitere Ausführung eines erfindungsgemäßen Dentalimplantats in der Seitenansicht dargestellt und insgesamt mit der Ziffer 10b bezeichnet. Hierbei sind anstelle von durchgehenden Stegen im Aufbaubereich Stege 18b vorgesehen, die aus einer Folge von Vorsprüngen gebildet sind, die entlang einer Linie angeordnet sind. Die durch die einzelnen Vorsprünge gebildeten Stege 18b sind wieder, wie bei den vorstehenden Ausführungen, parallel zueinander verlaufend angeordnet.

Fig. 6 zeigt eine weitere Anwandlung eines nicht erfindungsgemäßen Dentalimplantats, das insgesamt mit Ziffer 10c bezeichnet ist. Hierbei schließt sich an das Aufbauteil 18c unmittelbar angrenzend der Befestigungsbereich 22 an und ist als nach außen hervorstehendes Abutment ausgebildet. Es handelt sich also hierbei um ein Dentalimplantat in einteiliger Ausführung.

In Abwandlung zu den zuvor beschriebenen Ausführungen weist der Aufbaubereich 16 eine Folge von unterbrochenen Stegen 18c auf, die sich jeweils über die gesamte Länge des Aufbaubereichs und parallel zueinander in gleichmäßigen Abständen um den gesamten Außenumfang des Aufbaubereichs 16 erstrecken.

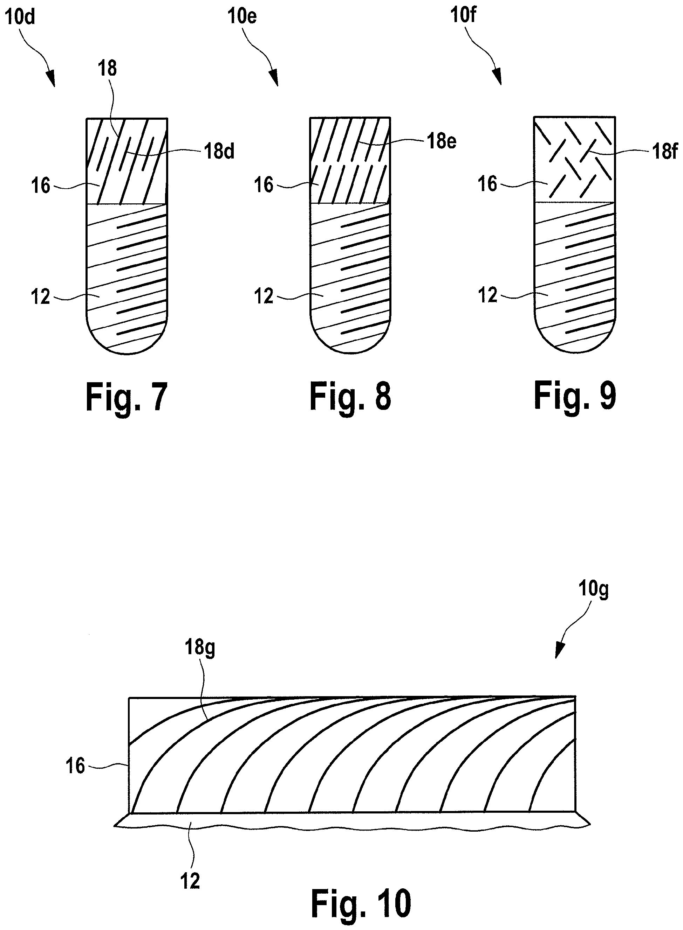

Fig. 7 zeigt eine weitere Abwandlung eines nicht erfindungsgemäßen Dentalimplantats, die insgesamt mit 10d bezeichnet ist. Hierbei weist der Aufbaubereich 16 eine Folge von durchgehenden Stegen 18 auf, wobei jeweils zwischen benachbarten Stegen 18 kürzere Stege 18d angeordnet sind, die gleichfalls parallel zu den übrigen Stegen 18 verlaufen.

Fig. 8 zeigt eine weitere Abwandlung eines nicht erfindungsgemäßen Dentalimplantats, die insgesamt mit 10e bezeichnet ist. Hierbei sind am Aufbaubereich 16 zwei Folgen von etwa gleichlangen Stegen 18e vorgesehen. Eine erste Folge von parallel zueinander verlaufenden Stegen 18e erstreckt sich über einen ersten Teil des Aufbaubereichs 16. Eine zweite Folge von parallel zueinander angeordneten Stegen 18e erstreckt sich um die zweite Hälfte des Aufbaubereichs 16 und kann entweder mit den ersten Stegen 18e ausgerichtet oder versetzt dazu angeordnet sein.

Fig. 9 zeigt schließlich eine nicht-erfindungsgemäße Abwandlung des Dentalimplantats, das insgesamt mit 10f bezeichnet ist.

Hierbei sind am Aufbaubereich 16 eine Mehrzahl von Stegen 18f in einem regelmäßigen Muster entlang des Außenumfangs angeordnet, wobei die Stege 18f winklig zueinander und versetzt zueinander angeordnet sind.

Fig. 10 zeigt eine weitere Abwandlung eines nicht erfindungsgemäßen Dentalimplantats, das insgesamt mit 10g bezeichnet ist. Hierbei ist nur eine ebene Abwicklung des Aufbaubereichs 16 mit angrenzendem Verankerungsbereich 12 vergrößert dargestellt. Während bei der Ausführung gemäß Fig. 1 die Stege 18 etwa linear in der Abwicklung verlaufen oder ausgehend vom Verankerungsbereich 12 zum Ende des Aufbaubereichs 16 hin in ihrer Steigung zunehmen, also konkav verlaufen, sind die Stege 18g gemäß Fig. 10 genau umgekehrt gekrümmt, verlaufen also konvex in Bezug auf das vom Verankerungsbereich 12 entfernte Ende des Dentalimplantats 10g. Auch bei einer derartigen Ausführung könnte ein Augmentat durch eine Art Schraubbewegung auf dem Aufbaubereich 16 befestigt werden.

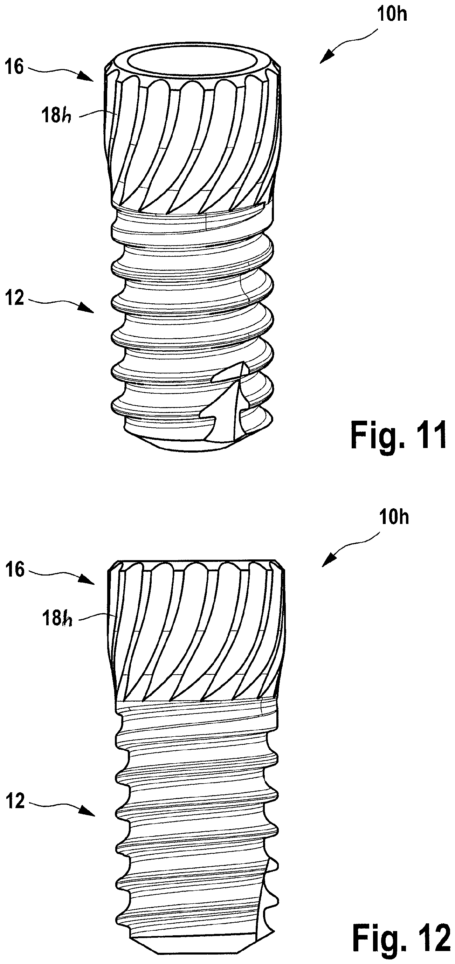

Fig. 11 und 12 zeigen eine leicht gegenüber der Ausführung gemäß Fig. 1 abgewandelte Ausführung des Dentalimplantats, die insgesamt mit 10h bezeichnet ist. Dabei ist die Form des Gewindes im Verankerungsbereich 12 leicht abgewandelt. Auch die Form der Stege 18 im Aufbaubereich 16 ist leicht abgewandelt. Die Stege 18h laufen nämlich nicht - wie bei Gewinden üblich - spitz nach außen aus, sondern weisen eine flache Außenoberfläche auf.

Dies unterstützt eine verbesserte Osseointegration.

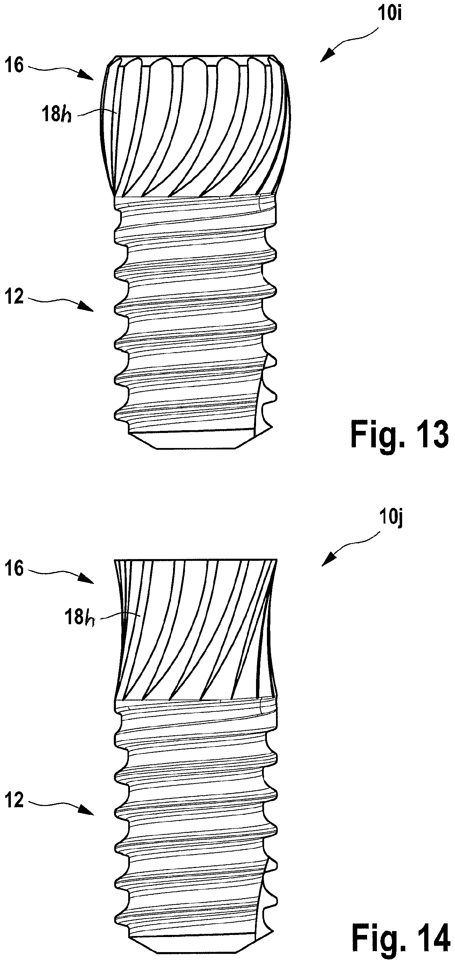

Fig. 13 zeigt eine weitere Abwandlung des Dentalimplantats gemäß Fig. 11 bzw. 12, das insgesamt mit 10i bezeichnet ist. Hierbei weist der Aufbaubereich 16 eine konvexe Außenkontur auf.

Auch der umgekehrte Fall mit einer konkaven Außenkontur des Aufbaubereichs 16 ist denkbar, wie Fig. 14 mit dem Dentalimplantat 10j zeigt.

Durch die konkave bzw. konvexe Außenkontur ist der Kontakt zum Knochen nur noch punktförmig bzw. linienförmig mit Unterbrechungen im Bereich der Rillen zwischen den Stegen 18.

Somit kann der Knochen zur Oberfläche im Aufbaubereich 16 leicht anwachsen.

Weitere Abwandlungen der Leitstrukturen am Aufbaubereich 16 sind denkbar.

## Patentansprüche

1. Zweiteiliges Dentalimplantat mit einem Verankerungsbereich (12) zur Verankerung in einem Knochen (26), der vorzugsweise ein Gewinde (14) zum Einschrauben in den Knochen (26) aufweist, und mit einem Befestigungsbereich (22), der eine Vertiefung (23) mit Befestigungselementen zur Befestigung eines Abutments aufweist, wobei das Dentalimplantat einen sich an den Verankerungsbereich (12) anschließenden Aufbaubereich (16) aufweist, der an seiner Außenoberfläche eine Leitstruktur mit einer Mehrzahl von nach außen hervorstehenden Stegen (18, 18a, b, c, d, e, f, g, h) aufweist, wobei zwischen benachbarten Stegen (18, 18a-e, h) jeweils eine Rille gebildet ist, **dadurch gekennzeichnet, dass** sich die Stege (18, 18a-e, h) in einem Winkel (α) zur Längsachse (34) des Dentalimplantats erstrecken, der zwischen 10° und 70° liegt oder dass die Stege (18, 18a-e, h) der Leitstruktur ausgehend von einem parallelen Verlauf zur Längsachse des Implantats einen Winkel zur Längsachse des Implantats von höchstens 70° umfassen, derart, dass die Stege (18, 18a-e, h) keine Selbsthemmung aufweisen, und **dass** sich die zueinander benachbarten Stege und Rillen bis an einen Rand des Implantats, welcher Rand zugleich das coronale Ende des Implantats ist, erstrecken.

2. Dentalimplantat nach Anspruch 1, **dadurch gekennzeichnet, dass** mindestens sechs, vorzugsweise mindestens zehn, weiter bevorzugt 12 bis 40 Stege (18, 18a-e, h) entlang der Außenoberfläche des Aufbaubereichs (16) in regelmäßigen Abständen zueinander verlaufend angeordnet sind.

3. Dentalimplantat nach einem der vorhergehenden Ansprüche, **dadurch gekennzeichnet, dass** die Stege (18, 18a, b, c) helixförmig, insbesondere spiralförmig entlang der Außenoberfläche des Aufbaubereichs (16) verlaufen.

4. Dentalimplantat nach einem der vorhergehenden Ansprüche, **dadurch gekennzeichnet, dass** die Stege (18, 18a-e, h)
i) in der gleichen Richtung wie ein Gewinde (14) am Verankerungsbereich (12) gegenüber der Längsachse (34) des Dentalimplantats geneigt sind, oder
**dass** die Stege (18, 18a-e)
ii) in der entgegengesetzten Richtung wie ein Gewinde (14) am Verankerungsbereich (12) gegenüber der Längsachse (34) des Dentalimplantats geneigt sind.

5. Dentalimplantat nach einem der vorhergehenden Ansprüche, **dadurch gekennzeichnet, dass** der Aufbaubereich (16) eine konvexe oder konische Außenkontur aufweist.

6. Dentalimplantat nach einem der vorhergehenden Ansprüche, **dadurch gekennzeichnet, dass** die Stege (18b, 18c, 18d, 18e, 18f) unterbrochen sind.

7. Dentalimplantat nach Anspruch 6, **dadurch gekennzeichnet, dass** entlang des Aufbaubereichs (16) um den gesamten Außenumfang eine erste Folge von Stegen (18e) parallel zueinander angeordnet ist, an die sich um den gesamten Außenumfang eine zweite Folge von parallel zueinander angeordneten Stegen (18e) anschließt, die mit der ersten Folge von Stegen (18e) ausgerichtet ist oder dazu versetzt angeordnet ist oder
**dass** zwischen benachbarten durchgehenden Stegen (18) einzelne unterbrochene Stege (18d) angeordnet sind.

8. Dentalimplantat nach Anspruch 6, **dadurch gekennzeichnet, dass** einzelne Stege (18f) entlang der Außenoberfläche in einem regelmäßigen Muster winklig zueinander angeordnet sind.

9. Dentalimplantat nach einem der vorhergehenden Ansprüche, **dadurch gekennzeichnet, dass,** sich die Stege (18, 18a-e, h) in einem Winkel (α) zur Längsachse (34) des Dentalimplantats erstrecken, der zwischen 20° und 60°, bevorzugt zwischen 35° und 55°, liegt.

10. Dentalimplantat nach einem der vorhergehenden Ansprüche, **dadurch gekennzeichnet, dass** die Rillen (20) eine geringere Tiefe aufweisen als die Gänge eines Gewindes (14) am Verankerungsbereich (12).

11. Dentalimplantat nach einem der vorhergehenden Ansprüche, **dadurch gekennzeichnet, dass** der Außenumfang am Verankerungsbereich (12) größer oder gleich dem Außenumfang am Aufbaubereich (16) ist.

12. Dentalimplantat nach einem der vorhergehenden Ansprüche, **dadurch gekennzeichnet, dass** der Befestigungsbereich (22) eine Vertiefung (23) mit Befestigungselementen zur Befestigung eines Abutments aufweist, wobei in der Vertiefung (23) ein Innengewinde (24) oder mindestens ein Formschlusselement zur Befestigung eines Abutments vorgesehen ist.

13. Dentalimplantat nach einem der vorhergehenden Ansprüche, **dadurch gekennzeichnet, dass** bei dem Dentalimplantat die Stege (18h) eine abgeflachte Außenoberfläche aufweisen.

## Claims

1. Two-part dental implant having an anchoring region (12) for anchoring in a bone (26), which preferably has a thread (14) for screwing into the bone (26), and having a fastening region (22) which has a depression (23) with fastening elements for fastening an abutment, wherein the dental implant has an abutment region (16) adjoining the anchoring region (12), which abutment region (16) has on its outer surface a guide structure with a plurality of outwardly projecting webs (18, 18a, b, c, d, e, f, g, h), wherein a groove is formed in each case between adjacent webs (18, 18a-e, h), **characterized in that** the webs (18, 18a-e, h) extend at an angle (□) to the longitudinal axis (34) of the dental implant which is between 10° and 70°, or **in that** the webs (18, 18a-e, h) of the guide structure, starting from a course parallel to the longitudinal axis of the implant, have an angle to the longitudinal axis of the implant of at most 70°, such that the webs (18, 18a-e, h) do not have any self-locking, and **in that** the mutually adjacent webs and grooves extend up to an edge of the implant, which edge is at the same time the coronal end of the implant.

2. Dental implant according to claim 1, **characterized in that** at least six, preferably at least ten, more preferably 12 to 40 webs (18, 18a-e, h) are arranged extending at regular intervals from one another along the outer surface of the abutment region (16).

3. Dental implant according to one of the preceding claims, **characterized in that** the webs (18, 18a, b, c) extend helically, in particular spirally, along the outer surface of the abutment region (16).

4. Dental implant according to one of the preceding claims, **characterized in that** the webs (18, 18a-e, h)
i) are inclined in the same direction as a thread (14) on the anchoring region (12) with respect to the longitudinal axis (34) of the dental implant, or
**in that** the webs (18, 18a-e)
ii) are inclined in the opposite direction as a thread (14) on the anchoring region (12) with respect to the longitudinal axis (34) of the dental implant.

5. Dental implant according to one of the preceding claims, **characterized in that** the abutment region (16) has a convex or conical outer contour.

6. Dental implant according to one of the preceding claims, **characterized in that** the webs (18b, 18c, 18d, 18e, 18f) are interrupted.

7. Dental implant according to claim 6, **characterized in that** a first sequence of webs (18e) is arranged parallel to one another along the abutment region (16) around the entire outer circumference, which is adjoined around the entire outer circumference by a second sequence of webs (18e) arranged parallel to one another, which is aligned with the first sequence of webs (18e) or is arranged offset thereto, or
**in that** individual interrupted webs (18d) are arranged between adjacent continuous webs (18).

8. Dental implant according to claim 6, **characterized in that** individual webs (18f) are arranged along the outer surface in a regular pattern at an angle to each other.

9. Dental implant according to one of the preceding claims, **characterized in that** the webs (18, 18a-e, h) extend at an angle (□) to the longitudinal axis (34) of the dental implant which is between 20° and 60°, preferably between 35° and 55°.

10. Dental implant according to one of the preceding claims, **characterized in that** the grooves (20) have a smaller depth than the turns of a thread (14) on the anchoring region (12).

11. Dental implant according to one of the preceding claims, **characterized in that** the outer circumference at the anchoring region (12) is greater than or equal to the outer circumference at the abutment region (16).

12. Dental implant according to one of the preceding claims, **characterized in that** the fastening region (22) has a depression (23) with fastening elements for fastening an abutment, wherein an internal thread (24) or at least one form-fitting element for fastening an abutment are provided in the depression (23).

13. Dental implant according to one of the preceding claims, **characterized in that** the webs (18h) have a flattened outer surface in the dental implant.

## Revendications

1. Implant dentaire en deux parties, comportant une zone d'ancrage (12) pour l'ancrage dans un os (26), qui présente de préférence un filetage (14) pour le vissage dans l'os (26), et comportant une zone de fixation (22) qui présente un renfoncement (23) avec des éléments de fixation pour la fixation d'un pilier, l'implant dentaire présentant une zone de montage (16) se raccordant à la zone d'ancrage (12), qui présente sur sa surface extérieure une structure de guidage avec une pluralité de nervures (18, 18a, b, c, d, e, f, g, h) faisant saillie vers l'extérieur, une rainure étant prévue entre des nervures voisines (18, 18a-e, h), **caractérisé en ce que** les nervures (18, 18a-e, h) s'étendent selon un angle (α), qui est compris entre 10° et 70°, par rapport à l'axe longitudinal (34) de l'implant dentaire ou **en ce que** les nervures (18, 18a-e, h) de la structure de guidage forment, à partir d'un tracé parallèle à l'axe longitudinal de l'implant, un angle d'au plus 70° avec l'axe longitudinal de l'implant, de telle sorte que les nervures (18, 18a-e, h) ne présentent pas d'arc-boutement, et **en ce que** les nervures et les rainures voisines les unes des autres s'étendent jusqu'à un bord de l'implant, lequel bord est en même temps l'extrémité coronale de l'implant.

2. Implant dentaire selon la revendication 1, **caractérisé en ce qu'**au moins six, de préférence au moins dix, davantage de préférence 12 à 40 nervures (18, 18a-e, h) sont disposées le long de la surface extérieure de la zone de montage (16) en s'étendant à intervalles réguliers les unes par rapport aux autres.

3. Implant dentaire selon l'une des revendications précédentes, **caractérisé en ce que** les nervures (18, 18a, b, c) s'étendent en forme d'hélice, en particulier en forme de spirale, le long de la surface extérieure de la zone de montage (16).

4. Implant dentaire selon l'une des revendications précédentes, **caractérisé en ce que** les nervures (18, 18a-e, h)
i) sont inclinées dans la même direction qu'un filetage (14) sur la zone d'ancrage (12) par rapport à l'axe longitudinal (34) de l'implant dentaire, ou
**en ce que** les nervures (18, 18a-e)
ii) sont inclinées dans la direction opposée à un filetage (14) sur la zone d'ancrage (12) par rapport à l'axe longitudinal (34) de l'implant dentaire.

5. Implant dentaire selon l'une des revendications précédentes, **caractérisé en ce que** la zone de montage (16) présente un contour extérieur convexe ou conique.

6. Implant dentaire selon l'une des revendications précédentes, **caractérisé en ce que** les nervures (18b, 18c, 18d, 18e, 18f) sont interrompues.

7. Implant dentaire selon la revendication 6, **caractérisé en ce que** le long de la zone de montage (16), une première série de nervures (18e) sont disposées parallèlement les unes aux autres sur tout le périmètre extérieur, à laquelle fait suite sur tout le périmètre extérieur une deuxième série de nervures (18e) disposées parallèlement les unes aux autres, qui sont alignées avec la première série de nervures (18e) ou sont décalées par rapport à celle-ci, ou **en ce que** des nervures interrompues individuelles (18d) sont disposées entre des nervures continues voisines (18).

8. Implant dentaire selon la revendication 6, **caractérisé en ce que** des nervures individuelles (18f) sont disposées angulairement les unes par rapport aux autres le long de la surface extérieure selon un motif régulier.

9. Implant dentaire selon l'une des revendications précédentes, **caractérisé en ce que** les nervures (18, 18a-e, h) s'étendent selon un angle (α), qui est compris entre 20° et 60°, de préférence entre 35° et 55°, par rapport à l'axe longitudinal (34) de l'implant dentaire.

10. Implant dentaire selon l'une des revendications précédentes, **caractérisé en ce que** les rainures (20) présentent une profondeur inférieure à celle des filets d'un filetage (14) sur la zone d'ancrage (12).

11. Implant dentaire selon l'une des revendications précédentes, **caractérisé en ce que** le périmètre extérieur au niveau de la zone d'ancrage (12) est supérieur ou égal au périmètre extérieur au niveau de la zone de montage (16).

12. Implant dentaire selon l'une des revendications précédentes, **caractérisé en ce que** la zone de fixation (22) présente un renfoncement (23) avec des éléments de fixation pour la fixation d'un pilier, un filetage intérieur (24) ou au moins un élément de liaison par complémentarité de forme étant prévu dans le renfoncement (23) pour la fixation d'un pilier.

13. Implant dentaire selon l'une des revendications précédentes, **caractérisé en ce que**, dans l'implant dentaire, les nervures (18h) présentent une surface extérieure aplatie.
